# EUROPÄISCHE PATENTSCHRIFT

(11) **EP 4 124 439 B1**
(45) Veröffentlichungstag und Bekanntmachung des Hinweises auf die Patenterteilung: **06.09.2023**
(21) Anmeldenummer: 21188661.9
(22) Anmeldetag: 30.07.2021
(51) Int. Cl.: B29C 45/27

(54) **HEISSKANALDÜSE**
HOT RUNNER NOZZLE
BUSE DE CANAL CHAUD

(43) Veröffentlichungstag der Anmeldung: 01.02.2023
(73) Patentinhaber: Witosa GmbH, 35066 Frankenberg/Wangershausen (DE)
(72) Erfinder: HALLENBERGER, Martin, 35088 Frohnhausen (DE); GLITTENBERG, Torsten, 35066 Frankenberg (DE)
(74) Vertreter: Walther Bayer Faber Patentanwälte PartGmbB

(56) Entgegenhaltungen:
- CN-A- 106 239 841
- US-A- 4 053 271
- US-A- 4 854 851
- US-A- 5 507 637
- US-A1- 2010 183 763
- US-A1- 2015 110 918
- US-B2- 9 272 455
- US-B2- 10 766 176

## Beschreibung

Die Erfindung betrifft eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze in die Spritzgießform austreibbar ist, wobei ein Anlagekragen zur dichtenden Anlage gegen die Spritzgießform vorgesehen ist, und wobei wenigstens der Anlagekragen, die Düsenspitze und/oder das Düsenrohr mittels eines generativen Fertigungsverfahrens als einteiliger Grundkörper hergestellt sind und zwischen dem Anlagekragen und der Düsenspitze eine wenigstens teilweise um die Düsenspitze umlaufende Wärmebarrierenut mit wenigstens einer Hinterschneidung eingebracht ist.

### STAND DER TECHNIK

Die US 2010/0183763 A1 offenbart ein Beispiel einer Heißkanaldüse für Spitzgießformen mit einem Nadelverschluss, wobei die Heißkanaldüse vorderseitig in eine Formenplatte eingeschraubt wird. Zwischen der Düsenvorderseite und der Formenplatte sind umlaufende Freibereiche ausgebildet, um den Wärmetransfer von der Heißkanaldüse in die Formenplatte zu reduzieren.

Aus der DE 10 2006 029 152 A1 ist eine gattungsbildende Heißkanaldüse für Spritzgießformen bekannt. Derartige Heißkanaldüsen dienen dazu, eine vorgeheizte, plastifizierte Kunststoffmasse in eine Spritzgießform einzuspritzen, wobei die Heißkanaldüse mit der Düsenspitze in die Kavität der Spritzgießform mündet. Ist der Spritzguss erfolgt, so schließt sich eine Abkühlphase an, während der die Kunststoffschmelze für den bereits nächsten Spritzgussschritt in der Heißkanaldüse im plastifizierten Zustand vorgehalten werden muss.

Hierzu ist die Heißkanaldüse beheizt, wobei moderne, insbesondere hoch additivierte Kunststoffe in einem nur schmalen Temperaturband vorgehalten werden dürfen, ohne dass die Kunststoffschmelze bei zu niedriger Temperatur entweder bereits erstarrt und der Folgeprozess unmöglich wird, oder die Kunststoffmasse überhitzt, sodass sich insbesondere additivierte Bestandteile der Kunststoffmasse zersetzen und die späteren Spezifikationen eines aus der Kunststoffmasse gespritzten Bauteils nicht eingehalten werden können.

Daraus ergibt sich die Forderung, eine Heißkanaldüse über der möglichst gesamten Länge von der Kanaleintrittsseite bis zur Düsenspitze so zu beheizen, dass sich eine gleichmäßige Temperaturverteilung ergibt, auch wenn der Anlagekragen im Bereich der Düsenspitze gegen die Spritzgießform dichtend zur Anlage gebracht ist und durch die kältere Spritzgießform auskühlen kann. Folgerichtig ergibt sich insbesondere die Schwierigkeit, die Düsenspitze derart zu temperieren, dass diese trotz der Wärmeableitung über die Anlage des Anlagekragens zur Spritzgießform die geforderte Temperatur hält, ohne dass sich über der Längserstreckung des Düsenrohrs in gewisser Weise ein Temperaturbauch ergibt, und sich der Kunststoff im Durchtrittskanal auf der Länge des Düsenrohres überhitzt und damit zersetzt.

Die EP 2 655 037 B1 offenbart eine Heißkanaldüse für Spritzgießformen, die über ihrer Länge von der Kanaleintrittsseite bis zur Düsenspitze ebenfalls eine möglichst gleichmäßige Temperaturverteilung aufweisen soll. Vorgeschlagen werden hierfür Hohlräume, insbesondere im Bereich des Düsenrohres, wofür ein generatives Fertigungsverfahren vorgeschlagen wird, mit dem derartige Hohlräume vorteilhaft hergestellt werden können. Es ist dabei angegeben, dass der einen Hohlraum umgebende Teilbereich des Grundkörpers der Heißkanaldüse einteilig ausgeführt sein kann, wobei die Heißkanaldüse insgesamt mehrteilig ausgestaltet ist und aus einer Anzahl von Einzelteilen zusammengesetzt wurde, wie am Endbereich oder an der Düsenspitze zu erkennen ist. Insofern wird beispielhaft ein Düsenrohr vorgeschlagen, an das sich an der Kanaleintrittsseite ein Düsensitz anschließt, und an den Düsensitz schließt sich ein Düsenträger an, wobei diese Komponenten jeweils miteinander gefügt werden müssen, die Heißkanaldüse folglich also nicht vollständig einteilig ausgeführt ist. Auf der Seite der Düsenspitze ist ein Isolierring gezeigt, der an der düsenspitzenseitigen Stirnfläche des Düsenrohres angebracht ist, und an den Isolierring schließt sich erst der eigentliche Düsenendabschnitt ebenfalls als Einzelteil an.

Die US 2016/0151948 A1 offenbart eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist, wobei ein Anlagekragen zur dichtenden Anlage gegen die Spritzgießform vorgesehen ist, und wobei wenigstens das Düsenrohr, die Düsenspitze und der Anlagekragen mittels eines generativen Fertigungsverfahrens als einteiliger Grundkörper hergestellt sind.

Die US 10,766,176 B2 offenbart eine Heißkanaldüse für Spritzgießformen, aufweisend ein Düsenrohr, in dem ein Durchtrittskanal zum Durchtritt einer Kunststoffschmelze ausgebildet ist, wobei sich der Durchtrittskanal von einer rückseitigen Kanaleintrittsseite bis zu einer vorderseitigen Düsenspitze entlang einer Mittelachse erstreckt und in wenigstens einem Austrittskanal in der Düsenspitze mündet, durch den die Kunststoffschmelze austreibbar ist. Die Düsenspitze ist mit einem Anlagekragen umschlossen, der zur dichtenden Anlage gegen die Spritzgussform dient, wobei zwischen dem Anlagekragen und der Düsenspitze eine um die Düsenspitze umlaufende Nut eingebracht ist, die einen einfachen Einstich bildet, um einen definierten inneren Ran des Anlagekragens in Abgrenzung gegen die äußere Mantelfläche der Düsenspitze zu bilden und um eine Spannungsentlastungskehle zwischen dem mechanisch hoch belasteten Anlagekragen und der Düsenspitze zu schaffen.

Aus der US 2015/0110918 A1 ist eine Heißkanaldüse für Spritzgießformen bekannt, die eine Düsenspitze mit einer umlaufenden Nut aufweist, die die Düsenspitze von einem Anlagekragen thermisch trennt. Die Düsenspitze ist zudem aus mehreren unterschiedlichen Werkstoffen aufgebaut, um gezielt die thermischen Eigenschaften der Düsenspitze zu beeinflussen.

Insbesondere der Anlagekragen ist an einem Bauteil ausgebildet, das einen Werkstoff mit einer niedrigen Wärmeleitung aufweist, während die eigentliche Düsenspitze einen Werkstoff mit einer hohen Wärmeleitfähigkeit aufweist, und wobei das Bauteil, das die Düsenspitze bildet, von einem Heizelement umschlossen ist.

Nachteilhafterweise ergeben sich auch bei diesen vorbekannten Heißkanaldüsen keine optimalen Wärmeverteilungen in der und rund um die Düsenspitze, da ein direkter Wärmestrom von der Düsenspitze in den Anlagekragen und damit in die Spritzgießform stattfinden kann. Da Heißkanaldüsen in ihrer Einbausituation jedoch aufgrund von thermischen Verspannungen der Einbauumgebung starke Kräfte insbesondere aus seitlicher Richtung auf den Anlagekragen erfahren können, kann eine geometrische Trennung der Düsenspitze zum Anlagekragen nicht auf einfache Weise vorgenommen werden.

### OFFENBARUNG DER ERFINDUNG

Die Aufgabe der Erfindung besteht in der weiteren Verbesserung einer Heißkanaldüse mit einem einfachen Aufbau und einem Temperaturprofil, bei dem ein ungewolltes Erstarren der Kunststoffschmelze im Durchtrittskanal unterbunden wird und bei dem zugleich die Kunststoffschmelze nicht überhitzt. Dabei soll die Heißkanaldüse möglichst einfach aufgebaut sein und hohen mechanischen Kräften standhalten können.

Zur Lösung der voranstehend angeführten Aufgabe schlägt die Erfindung vor, dass im Bereich der Düsenspitze und/oder unterhalb der sich verjüngenden Düsenspitze im Bereich der Wärmebarrierenut eine Sensoraufnahme im Grundkörper eingebracht ist, in die ein Temperaturmesssensor einsetzbar ist, wobei die Sensoraufnahme die umlaufende Wärmebarrierenut unterbricht, da die Sensoraufnahme in den Bereich der Wärmebarrierenut hineinragt und folglich die Wärmebarrierenut nicht auf dem vollen Umfang der Düsenspitze umschließt, sondern sodass die Wärmebarrierenut im Bereich der Sensoraufnahme unterbrochen ist.

Kerngedanke ist damit, dass im Bereich der Düsenspitze und/oder leicht unterhalb der eigentlichen sich verjüngenden Düsenspitze, insbesondere im Bereich der Wärmebarrierenut, eine Sensoraufnahme im Grundkörper eingebracht ist, in die ein Temperaturmesssensor eingesetzt werden kann. Die Sensoraufnahme unterbricht dabei die umlaufende Wärmebarrierenut, da sie in die Wärmebarrierenut hineinragt, sodass diese folglich nicht auf dem vollen Umfang die Düsenspitze umschließt, sondern die Wärmebarrierenut ist im Bereich der Sensoraufnahme unterbrochen, wodurch die Temperatur der Düsenspitze noch genauer gemessen werden kann, da der Temperaturmesssensor trotz eingebrachter Wärmebarrierenut nah an oder sogar in die Düsenspitze herangeführt bzw. hineingeführt werden kann.

Mit dem Temperaturmesssensor in der Sensoraufnahme kann folglich eine Temperatur unmittelbar in der Düsenspitze erfasst werden, sodass über eine Regeleinrichtung ein Heizdraht angesteuert werden kann, und sodass der Heizdraht einen Wärmeertrag in dem Grundkörper und insbesondere in den Bereich der Düsenspitze einbringt, mit dem die Düsenspitze eine vorgegebene Solltemperatur im Wesentlichen konstant hält.

Die Wärmebarrierenut verhindert die direkte Auskühlung der Düsenspitze über den Anlagekragen, wenn dieser an der Spritzgießform anliegt. Die Wärmebarrierenut ist daher mit einem Querschnitt ausgebildet, der nicht lediglich einen Einstich oder eine Kehle zwischen der innen liegenden Düsenspitze und dem die Düsenspitze umgebenden Anlagekragen bildet, der oder die etwa zur Vermeidung von Kerbwirkungen dienen kann, sondern die Wärmebarrierenut ist so tief ausgebildet, dass diese beispielsweise zueinander parallele innere und äußere Wandungen aufweist und insbesondere eine Tiefe entlang der Mittelachse aufweist, die größer ist als die verbleibende radiale Wanddicke des die Wärmebarrierenut umschließenden Anlagekragens.

Der Anlagekragen kann dabei einen radial nach außen geformten kragenartigen Bereich aufweisen, mit dem dieser gegen das Spritzgießwerkzeug anliegt. Im Sinne der vorliegenden Erfindung umfasst der Anlagekragen aber auch solche Anlagebereiche oder Anformungen, die beispielsweise zylindrisch ausgeführt sind, und die eigentliche Kragenform ist vorliegend nicht zwingend Bestandteil des Anlagekragens. Der Anlagekragen gemäß der Erfindung betrifft insoweit alle möglichen Anlagebereiche einer Heißkanaldüse, die zur Anlage gegen ein Spritzgießwerkzeug vorgesehen sind, auch solche, die nicht direkt eine kragenartige Ausformung aufweisen, etwa zylindrische Außendichtungen.

Die Düsenspitze umfasst im Sinne der vorliegenden Erfindung auch alle Abwandlungen von einer Spitzenform, beispielsweise umfasst die Düsenspitze im Sinne der Erfindung auch Mündungsöffnungen oder sonstige Formen von Öffnungen, die dazu ausgebildet sind, eine plastifizierte Kunststoffschmelze in die Kavität einer Spritzgießform zu spritzen. Insofern sind vorliegend mit der beschriebenen Düsenspitze auch Mündungsöffnungen mit umfasst, die beispielsweise bei Heißkanaldüsen mit einem Nadelverschluss auftreten.

Die Spritzgießform weist eine wesentlich geringere Temperatur auf als die Düsenspitze zur Vermeidung der Erstarrung der Kunststoffschmelze aufweisen muss, und die Wärmebarrierenut umschließt die Düsenspitze wenigstens auf einem Teilumfang oder auf dem vollen Umfang, sodass die Wärmebarrierenut einen direkten Wärmefluss von der Düsenspitze und dem darunter liegenden Materialbereich des sich anschließenden Düsenrohres in den Anlagekragen verhindert.

Durch die spezielle Gestaltung der Wärmebarrierenut kann ein Optimum gefunden werden zwischen einer mechanischen Belastbarkeit des Anlagekragens, der sich außenumfänglich um die Wärmebarrierenut erstreckt, und einen kontrollierten Wärmefluss, sodass die Düsenspitze und damit der Führungsbereich der Kunststoffschmelze durch den Durchtrittskanal und insbesondere bis in den Austrittskanal in der Düsenspitze hinein optimale Temperaturwerte aufweist, insbesondere derart, dass der Durchtrittskanal über seiner wesentlichen Länge und der Austrittskanal in der Düsenspitze im Wesentlichen eine homogene, d.h. eine auch zueinander gleiche Temperatur aufweisen. Die Homogenität der Temperatur kann sich dabei insbesondere entlang der Mittelachse und damit entlang des Führungsbereichs der Kunststoffschmelze ergeben.

Die Kanaleintrittsseite der Heißkanaldüse bildet eine hintere, untere Seite und die Düsenspitze bildet eine vordere, obere Seite. Ist im Folgenden die Rede von niedriger und höher und unterhalb und oberhalb der Düsenspitze, so ist der untere, hintere, niedrigere Bereich der Bereich, der in Richtung zur Kanaleintrittsseite weist, und der obere, vordere Bereich ist der Bereich, der in Richtung zum spitzen Ende der Düsenspitze weist.

Die geometerische Ausbildung der Wärmebarrierenut weist einen ersten Abschnitt auf, der sich in der Mittelachse erstreckt. Betrachtet man nur den Verlauf des ersten Abschnittes der Wärmebarrierenut, so umschließt dieser erste Abschnitt die Mittelachse etwa hülsenförmig. Der erste Abschnitt ist dabei insbesondere gerade ausgebildet, was bedeutet, dass der Querschnitt des ersten Abschnittes der Wärmebarrierenut sich länglich erstreckt und parallel zur Mittelachse verläuft.

Weiterhin ist dabei die Wärmebarrierenut so ausgeführt, dass der erste Abschnitt in Richtung zur rückseitigen Kanaleintrittsseite in die Hinterschneidung übergeht. Die Hinterschneidung bildet eine Abweichung des geraden Verlaufes des ersten Abschnittes, und die Hinterschneidung erstreckt sich insofern nicht weiter parallel zur Mittelachse der Heißkanaldüse, sodass sich daraus bereits die Hinterschnittigkeit ergibt.

Insbesondere ist vorgesehen, dass die Wärmebarrierenut einen zweiten Abschnitt aufweist, der sich unter einem Winkel von der Mittelachse weg in Richtung zur rückseitigen Kanaleintrittsseite erstreckt. Anders ausgedrückt weist der Querschnitt der Wärmebarrierenut mit dem ersten Abschnitt und dem zweiten Abschnitt einen Verlauf mit einem Knick auf, und der zweite Abschnitt erstreckt sich nach dem Knick unter einem Winkel relativ zum ersten Abschnitt zwar weiter in die hintere Richtung, aber von der Mittelachse der Heißkanaldüse weg geneigt.

Betrachtet man nicht die Querschnittsgeometrie der Wärmebarrierenut, sondern betrachtet man den mit der Wärmebarrierenut gebildeten Hohlraum in dem Grundkörper der Heißkanaldüse um die Düsenspitze herum, so weist die Wärmebarrierenut einen ersten Zylinderabschnitt auf, der nach hinten in einen nachfolgenden Kegelabschnitt übergeht.

Die Wärmebarrierenut kann am Ende des zweiten Abschnittes eine Querschnittsaufdickung aufweisen, sodass das Ende des Kegelabschnittes der Wärmebarrierenut aufgedickt ist. Die Querschnittsaufdickung kann insbesondere einen Kreisquerschnitt bilden, um Kerbspannungen zu minimieren. Insbesondere dann, wenn die Heißkanaldüse in der Einbauumgebung unter thermischen Verspannungen belastet wird, können sehr hohe Wärmeverzugskräfte auf den Anlagekragen wirken. Weist das innere Ende des Einschnittes einen aufgeweiteten Kreisquerschnitt auf, so kann ein Versagen der Heißkanaldüse verhindert oder zumindest verzögert werden.

Weiterhin weist die Wärmebarrierenut insbesondere zueinander parallel verlaufende innere und äußere Nutwandungen auf, und damit besitzt die Wärmebarrierenut eine im Wesentlichen gleichbleibende Nutbreite bei vergleichsweise großer Nuttiefe. Die innere Nutwandung bildet beispielsweise eine Mantelfläche des inneren Bereiches der Düsenspitze, und die äußere Nutwandung bildet eine umlaufende Innenfläche des Anlagekragens, insbesondere im Bereich des ersten Abschnittes der Wärmebarrierenut. Insofern begrenzt der erste Abschnitt der Wärmebarrierenut den Anlagekragen radial nach innen.

Ein weiterer Vorteil wird erreicht, wenn der erste Abschnitt der Wärmebarrierenut in einem Querschnitt eine taschenartig und radial nach außen ausgebildete Ausbuchtung aufweist, wobei sich die Ausbuchtung im Bereich des Anlagekragens befindet. Dadurch kann der Wärmestrom vom Anlagekragen in die an den Anlagekragen anliegende Spritzgießform weiter minimiert werden. Die taschenartig radial nach außen ausgebildete Ausbuchtung befindet sich insbesondere in der äußeren Nutwandung, die den Anlagekragen wenigstens über dem ersten Abschnitt nach innen begrenzt. Die Ausbuchtung bildet im Sinne der Erfindung ebenfalls eine Hinterschneidung wie auch der zweite Abschnitt der Wärmebarrierenut.

Die Wärmebarrierenut mündet insbesondere in eine umlaufenden Planfläche des Anlagekragens nach oben hin, wobei die Planfläche mit Bezug auf das Ende der Düsenspitze hinter einer Austrittsseite des Austrittskanals in der Düsenspitze liegt. Mit anderen Worten liegt die Austrittsseite des Austrittskanals in Richtung zur Düsenspitze und die Planfläche, in die die Wärmebarrierenut mündet, liegt unterhalb der Austrittsseite des Austrittskanals und damit in Richtung zur Kanaleintrittsseite. Im Betrieb der Heißkanaldüse tritt die Kunststoffschmelze aus dem Austrittskanal aus und wird weiter in Richtung Spritzgießform gefördert, sodass die Kunststoffschmelze die Wärmebarrierenut nicht oder nur einmalig mit Kunststoffmasse füllt.

Zur Temperaturführung kann ein Heizdraht vorgesehen sein, der den Bereich des Grundkörpers unterhalb der Düsenspitze mäanderförmig umschließt. Durch die Mäanderform wird im Gegensatz zu einer Wickelform vermieden, dass der Heizdraht an wenigstens einer Stelle eine Überlappung aufweisen muss, da ein Kreuzen des Heizdrahtes bei einer mäanderförmigen Anordnung um die Düsenspitze herum vermieden wird. Zudem muss der Heizdraht nicht in eine Rille oder eine Drahtaufnahme eingebracht werden, da die Mäanderform fern von der Heißkanaldüse vorgefertigt werden kann und anschießend auf den Aufnahmeabschnitt unterhalb der Düsenspitze aufgesetzt und beispielsweise mit einer Sicherungshülse gesichert werden kann. Damit ergibt sich eine erhebliche Vereinfachung der Anbringung des Heizdrahtes und eine vereinfachte Ausstattung der Heißkanaldüse mit einem Heizdraht.

Ein weiteres wesentliches Merkmal der Heißkanaldüse ist eine Wabenstruktur, die der Grundkörper auf seiner Außenfläche aufweist. Die Wabenstruktur befindet sich insbesondere über dem Abschnitt des Düsenrohres, und endet unterhalb des Bereiches, der mit dem mäanderförmig verlegten Heizdraht um den unteren Bereich der Düsenspitze herum ausgebildet ist.

Ein weiterer Vorteil ist mit einem umlaufenden Hohlraum erreichbar, der im Grundkörper ausgebildet ist und der sich bis unter den inneren Mündungsbereich des Austrittskanals in den Durchtrittskanal hinein erstreckt. Beginnt der umlaufende Hohlraum im Grundkörper, insbesondere im Abschnitt des Düsenrohres, so kann mit den geometrischen Verhältnissen der Wärmebarrierenut und dem Ende der Wärmebarrierenut eine optimierte Temperaturverteilung in und um die Düsenspitze herum erzielt werden, sodass die Kunststoffschmelze über ihren gesamten Weg durch die Heißkanaldüse hindurch eine im Wesentlichen gleichbleibende Temperatur erfährt, insbesondere zwischen den Spritzyklen.

Die Optimierung der Temperaturverteilung im Grundkörper der Heißkanaldüse, insbesondere im Bereich der Düsenspitze, kann weiter optimiert werden durch eine gezielte Beeinflussung der Wabenstruktur in der äußeren Mantelfläche des Grundkörpers. Beispielsweise können die Waben als Durchbrüche in der äußeren Wandung des Grundkörpers offen oder geschlossen ausgeführt werden, wodurch der Wärmestrom im Material gezielt beeinflusst werden kann. Die Waben der Wabenstruktur bilden in der Regel Öffnungen, die teilweise, bereichsweise oder vereinzelt durch Verschlussplatten verschlossen sein können, die beispielsweise an verschiedenen Positionen in den Waben der Wabenstruktur eingebracht sind oder die verschieden dick ausgeführt oder verschieden tief eingesetzt sind. So bietet die Wabenstruktur nicht nur eine hohe mechanische Steifigkeit des Grundkörpers bei einem reduzierten Materialeinsatz, sondern die Waben der Wabenstruktur bilden Öffnungen, die gezielt so beeinflusst werden können, dass die Wärmeleitfähigkeit des Grundkörpers lokal beeinflusst werden kann. Die Verschlussplatten sind dabei ebenfalls einteilig mit der Wabenstruktur im generativen Fertigungsverfahren hergestellt.

Mit den vorstehen genannten Merkmalen kann eine Heißkanaldüse sowohl mechanisch als auch thermisch so optimiert werden, dass die Kunststoffschmelze im Wesentlichen durch die gesamte Heißkanaldüse geführt werden kann, und dabei auf einer konstanten Solltemperatur gehalten werden kann. Dies geschieht mit einer entsprechenden Wechselwirkung zwischen der Geometrie der Wärmebarrierenut zur Erzeugung einer optimalen Wärmeverteilung und eines gezielt gesteuerten Wärmestroms von der Düsenspitze bis in den Anlagekragen hinein. Ferner erfolgt eine nebengeordnete Optimierung mittels der Wabenstruktur des Grundkörpers, die Öffnungen umfasst, die gezielt teilweise oder vollständig geschlossen werden können, sodass die Wärmeverteilung in der Wabenstruktur beeinflusst werden kann. Insbesondere gibt sich in Wechselwirkung mit der Wabenstruktur ein Vorteil bei der Anwendung eines umlaufenden Hohlraums im Grundkörper, der gezielt so bis unter die Düsenspitze geführt sein kann, sodass diese gemeinsam mit der Wärmebarrierenut einen optimierten Wärmeübergangsquerschnitt von der Düsenspitze bis in den Außenbereich und insbesondere bis in den Anlagekragen hinein ermöglicht.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Seitenansicht der Heißkanaldüse,
- Figur 2: eine Seitenansicht der Heißkanaldüse in einer Querschnittsansicht,
- Figur 3: eine Detailansicht der Heißkanaldüse im Bereich der Düsenspitze und des Anlagekragens und
- Figur 4: eine weitere Detailansicht der Heißkanaldüse im Bereich der Düsenspitze mit einem Heißdraht.

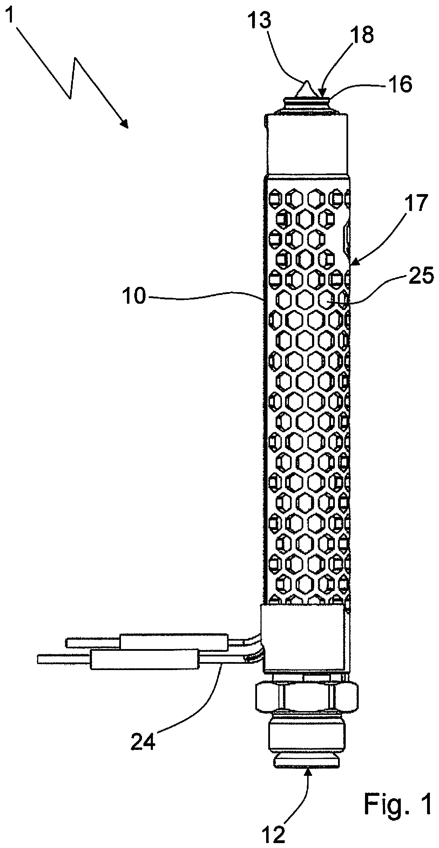

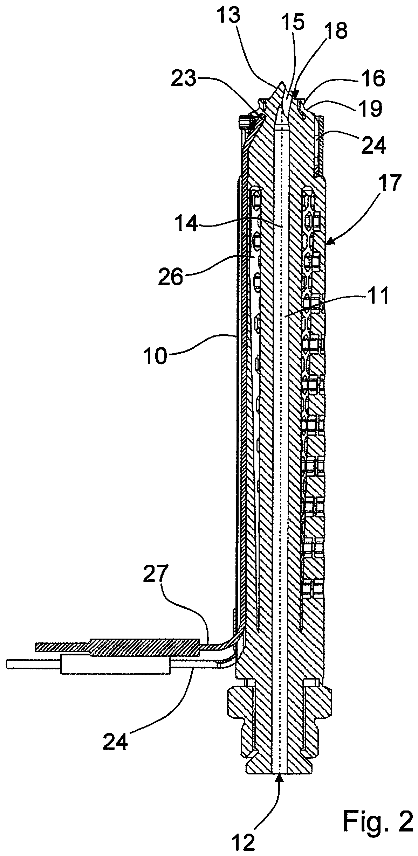

Die Figuren 1 und 2 zeigen in einer Seitenansicht und in einer Querschnittsansicht ein Ausführungsbeispiel einer Heißkanaldüse 1 zur Anordnung an oder in Spritzgießformen, und durch die Heißkanaldüse 1 kann Kunststoffschmelze unmittelbar in die Kavität der Spritzgießform eingespritzt werden. Die Heißkanaldüse 1 weist ein Düsenrohr 10 auf, in dem ein Durchtrittskanal 11 zum Durchtritt der Kunststoffschmelze ausgebildet ist. Der Durchtrittskanal 11 erstreckt sich von einer rückseitigen Kanaleintrittsseite 12 bis zu einer vorderseitigen Düsenspitze 13 entlang einer Mittelachse 14. Auf der oberen Seite mündet der Durchtrittskanal 11 unterhalb der Düsenspitze 13 in den Austrittskanal 15, der schräg verlaufend die Düsenspitze 13 durchdringt, sodass die Kunststoffschmelze auf der äußeren Austrittsseite des Austrittskanals 15 in die Spritzgießform gelangen kann.

Im oberen Bereich der Heißkanaldüse 1 ist ein Anlagekragen 16 zur dichtenden Anlage gegen die Spritzgießform vorgesehen, wobei wenigstens das Düsenrohr 10, die Düsenspitze 13 und der Anlagekragen 16 mittels eines generativen Fertigungsverfahrens als einteiliger Grundkörper 17 hergestellt sind. Insbesondere sämtliche Bereiche und Abschnitte, Teile und Funktionseinheiten des Grundkörpers 17 sind als monolithischer, einteiliger Körper ausgeführt, ohne dass der Grundkörper 17 ungeachtet eines Heizdrahtes und/oder eines Temperaturmesssensors und sonstigen Kleinteilen aus mehreren Komponenten zusammengesetzt montiert werden muss.

Insbesondere ist zwischen dem Anlagekragen 16 und der Düsenspitze 13 eine die Düsenspitze 13 fast vollständig umschließende Wärmebarrierenut 18 vorgesehen, wobei die Wärmebarrierenut 18 eine Hinterschneidung 19 aufweist. Hinterschneidungen im Sinne der Erfindungen sind in einem kontinuierlichen Körper eingebrachte Aushöhlungen, die über spanende, erodierende oder sonstige Bearbeitungsverfahren nicht hergestellt werden können, indem etwa das Material aus dem kontinuierlichen Körper abgetragen oder entnommen wird. Die Wärmebarrierenut 18 ist insofern nicht mit einem spanenden oder erodierenden Werkzeug herstellbar, ebenso wenig kann die Wärmebarrierenut 18 mittels einer Laserablation der dergleichen hergestellt werden. Die Hinterschneidung ist so ausgeführt, dass die Wärmebarrierenut abgesehen von Urformverfahren nur im generativen Fertigungsverfahren hergestellt werden kann, ohne dass die Wärmebarrierenut 18 umgebenden Bauteile miteinander gefügt sind.

Die Mantelfläche des Düsenrohres 10 mit einer Wabenstruktur 25 ausgebildet, siehe Figur 1. Figur 2 zeigt einen sich zwischen dem Durchtrittskanal 11 und dem Düsenrohr 10 ein umlaufender Hohlraum 26 befindet, sodass die Wabenstruktur 25 eine Vielzahl von nebeneinander angeordneten Öffnungen in äußeren Rohrkörper 10 bewirkt. Wie im Querschnitt der Figur 2 dargestellt, ist der Hohlraum 26 von der Kanaleintrittsseite 12 bis zur Düsenspitze 13 nicht gleichförmig ausgebildet, sondern der Hohlraum 26 weist mit weiterem Verlauf in Richtung zur Düsenspitze 13 eine größere radiale Aufweitung auf. Dadurch kann der Wärmeübergang zwischen dem Düsenrohr 10 und dem Durchtrittskanal 11 gezielt beeinflusst werden. Die Kunststoffschmelze, die über die Kanaleintrittsseite 12 in die Heißkanaldüse 1 eintritt, weist zunächst eine hohe Temperatur auf, sodass bei einem sehr kleinen radialen Spalt des umlaufenden Hohlraums 26 ein starker Wärmeübergang in das Düsenrohr 10 und damit zur Einbauumgebung ermöglicht wird. Je weiter die Kunststoffschmelze in Richtung zur Düsenspitze 13 bewegt wird, desto größer wird der radiale Spalt des umlaufenden Hohlraums 26 und so geringer wird der Wärmeübergang vom Durchtrittskanal 11 in das Düsenrohr 10 hinein, sodass die Auskühlung der Kunststoffschmelze von der Kanaleintrittsseite 12 bis zur Düsenspitze 13 kontinuierlich abnimmt.

Durch die Anbringung eines Heizdrahtes 24 im oberen Bereich kurz unterhalb der Düsenspitze 13 kann die Heißkanaldüse 1 im Bereich der Düsenspitze 13 auf einer Solltemperatur gehalten werden. Insbesondere in dem Bereich unmittelbar unterhalb der Düsenspitze 13 ist der Heißdraht 24 mäanderförmig um diese herum ausgebildet, sodass ein besonders großer Wärmeeintrag in diesem Bereich erfolgt. So kann bei Eintritt der Kunststoffschmelze in die Kanaleintrittsseite 12 zunächst die noch vorhandene Eigenwärme in der Kunststoffschmelze vorhanden bleiben, die über dem umlaufenden Hohlraum 26 in das Düsenrohr 10 abwandert. Die Auskühlung der Kunststoffschmelze nimmt dabei in Richtung zur Düsenspitze 13 ab, bis schließlich durch den stärkeren Wärmeeintrag unterhalb der Düsenspitze 13 mittels des Heizdrahtes 24 die Temperatur der Kunststoffschmelze auf Solltemperatur gehalten wird.

Im Bereich unmittelbar unterhalb der Düsenspitze 13 ist ein Temperaturmesssensor 23 aufgenommen. Der Temperaturmesssensor 23 misst die Temperatur in der Düsenspitze 13 und diese kann über ein Signalkabel 27 an eine Steuereinheit bereitgestellt werden. Mittels einer solchen Steuereinheit kann der Heizdraht 24 so angesteuert werden, dass die Düsenspitze 13 auf der gewünschten Solltemperatur gehalten wird.

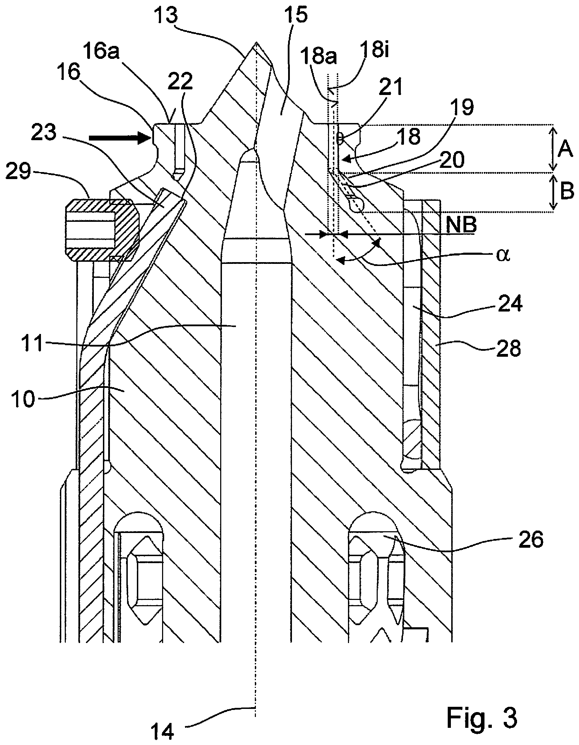

Figur 3 zeigt eine Detailansicht der Heißkanaldüse 1 im Bereich der Düsenspitze 13. In der vergrößerten Ansicht ist im unteren Bereich ein Abschnitt des Düsenrohrs 10 zu erkennen, das sich in Richtung zur Düsenspitze 13 hin verjüngt, wobei über dem verbleibenden, letzten Abschnitt vor der Düsenspitze 13 um das Düsenrohr 10 der Heizdraht 24 mäanderförmig herumgeführt ist. Der Heizdraht 24 ist mit einer Sicherungshülse 28 umschlossen.

Die vergrößerte Ansicht zeigt insbesondere den in Richtung zur Düsenspitze 13 weisenden Ausläufer des inneren um die Mittelachse 13 herumgeführten Hohlraum 26, der das äußere Düsenrohr 10 vom inneren Durchtrittskanal 11 trennt. Der Durchtrittskanal 11 beschreibt den eigentlichen Kanal zur Durchführung der Kunststoffschmelze, und zwischen der Außenseite des Durchtrittskanals 11 und der Innenseite des Düsenrohrs 10 erstreckt sich der umlaufende Hohlraum 26. Der Durchtrittskanal 11 mündet innerhalb der Düsenspitze 13 und geht über in einen Austrittskanal 15, der unter einem Winkel zur Mittelachse 14 in die Düsenspitze 13 in Form einer Bohrung eingebracht ist. Das Ausführungsbeispiel zeigt lediglich einen Austrittskanal 15, wobei auch mehrere Austrittskanäle 15 auf dem Umfang der Düsenspitze 13 verteilt vorgesehen sein können, insbesondere um die Kunststoffschmelze beispielsweise mit einem Drall in die Spritzgießform einzuspritzen.

Im Querschnitt ist auf der linken Seite der Temperaturmesssensor 23 gezeigt, der mit einem Signalkabel 27 verbunden ist, das auf der Außenseite des Düsenrohres 10 nach unten verlegt ist. Der Temperaturmesssensor 23 ist mit einem Schraubelement 29 in der Sensoraufnahme 22 gesichert.

Das erfindungswesentliche Merkmal betrifft eine Wärmebarrierenut 18, die in einem radial umlaufenden Bereich zwischen dem Anlagekragen 16 und der Düsenspitze 13 eingebracht ist. Die Wärmebarrierenut 18 weist eine Hinterschneidung 19 auf, die dadurch bestimmt ist, dass der Bereich der Hinterschneidung 19 nicht mehr von einem Mündungsbereich der Wärmebarrierenut 18 aus herstellbar ist. Insbesondere ist die Hinterschneidung 19 nicht mittels eines spanenden oder abtragenden Fertigungsverfahrens herstellbar.

Durch die Hinterschneidung 19 ist die Wärmebarrierenut 18 unterteilt in einen ersten Abschnitt A, der sich etwa hülsenförmig um die Mittelachse 14 erstreckt. Um weiteren Verlauf ist die Wärmebarrierenut 18 bestimmt durch einen zweiten Abschnitt B, der sich unter einem Winkel α von der Mittelachse 14 weg in Richtung zur rückseitigen Kanaleintrittsseite hin erstreckt. Am Ende des zweiten Abschnittes B ist eine Querschnittsaufdickung 20 vorgesehen, die etwa einen Kreisquerschnitt aufweist.

Weiterhin weist die Wärmebarrierenut 18 eine innere Nutwandung 18i und eine äußere Nutwandung 18a auf, wobei beide Nutenwandungen 18i und 18a parallel zueinander verlaufen, womit sich eine gleichbleibende Nutbreite NB ergibt.

Im ersten Abschnitt A weist die Wärmebarrierenut 18 eine Ausbuchtung 21 auf, die sich radial nach außen in den Anlagekragen 16 hinein erstreckt. Dadurch wird die Wärmeleitung im Anlagekragen 16 geschwächt, sodass die Auskühlung des Anlagekragens 16 in Kontakt mit der Spritzgießform minimiert wird.

Zugleich wird durch den Knick zwischen dem ersten Abschnitt A und dem zweiten Abschnitt B der Wärmeübergang von der Düsenspitze 13 in den Anlagekragen 16 weiter minimiert, wobei durch die Hinterschneidung 19 zugleich eine mechanisch stabile Ausgestaltung des Anlagekragens 16 gewährleistet ist, so dass dieser beispielsweise durch Seitenkräfte im Einbauzustand der Heißkanaldüse 1 hoch belastet werden kann. Derartige Kräfte entstehen insbesondere durch thermische Verspannungen in der Einbausituation, da der Anlagekragen 16 mit einer seitlichen Kraft beaufschlagt sein kann, wie mit einem Pfeil auf der linken Seite angedeutet. Da sich auf der linken Seite des Querschnitts die Sensoraufnahme 22 mit dem eingebrachten Temperaturmesssensor 23 befindet, ist auf der Schnittebene lediglich an dieser Umfangsposition die Wärmebarrierenut 18 unterbrochen.

Die Wärmebarrierenut 18 weist auf einer Planfläche 16a des Anlagekragens 16 ihren Mündungsbereich auf, von dem beginnend sich die Wärmebarrierenut 18 nach unten hin fortsetzt. Im Wesentlichen umschließt dabei die Wärmebarrierenut 18 den Wechselbereich der Düsenspitze 13, bevor sich dieser innenseitig in den Durchtrittskanal 11 und außenseitig in das Düsenrohr 10 fortsetzt.

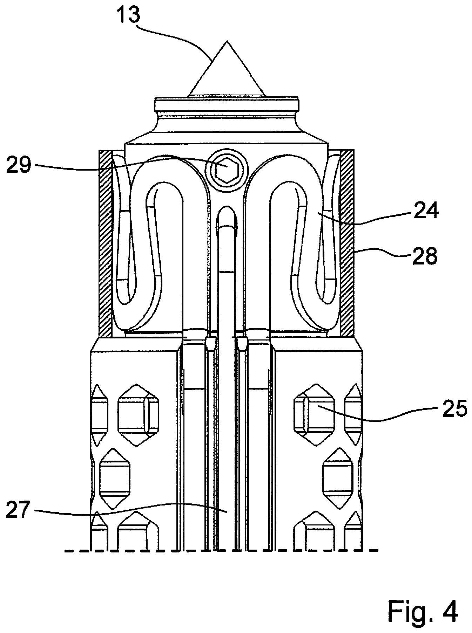

Figur 4 zeigt die Heißkanaldüse 1 wiederum im Bereich der Düsenspitze 13 in einer Seitenansicht, wobei vorderseitig das Signalkabel 27 des Temperaturmesssensors 23 gezeigt ist, der mit dem Schraubelement 29 gesichert ist. Unterseitig der Düsenspitze 13 ist der auslaufende Bereich des Düsenrohres 10 mit dem Heizdraht 24 umschlossen, der mäanderförmig auf der Mantelfläche des oberen Endes des Düsenrohres 10 aufgebracht ist. Zur Sicherung und zum Schutz ist der Heizdraht 24 schließlich mit einer Sicherungshülse 28 umschlossen.

Das Düsenrohr 10 weist eine Wabenstruktur 25 auf, wobei die Öffnungen der Wabenstruktur 25 im Wesentlichen Durchgangsbereiche bilden, sodass der innenseitige umlaufende Hohlraum 26 gemäß Figur 3 mit Öffnungen zur Außenseite des Düsenrohres 10 verbunden ist. Die Wabenstruktur 25 erzeugt eine vorteilhafte Wärmeverteilung im Düsenrohr 10, da der Wärmestrom insbesondere nicht verstärkt entlang der Mittelachse 14 erfolgen kann, da die Wabenstruktur 25 einen unmittelbaren Wärmestrom im Düsenrohr 10 hemmt. Der Heizdraht 24 endet unterhalb der eingebrachten Wärmebarrierenut 18, wobei die Ummantelung des Düsenrohres 10 mit dem Heizdraht 24 etwa kurz unterhalb des auslaufenden Bereiches der Wärmebarrierenut 18 mit der Querschnittsabdeckung 20 endet, siehe hierzu im Vergleich Figur 3.

### Bezugszeichenliste:

- 1: Heißkanaldüse
- 10: Düsenrohr
- 11: Durchtrittskanal
- 12: Kanaleintrittsseite
- 13: Düsenspitze
- 14: Mittelachse
- 15: Austrittskanal
- 16: Anlagekragen
- 16a: Planfläche
- 17: Grundkörper
- 18: Wärmebarrierenut
- 18i: innere Nutwandung
- 18a: äußere Nutwandung
- 19: Hinterschneidung
- 20: Querschnittsaufdickung
- 21: Ausbuchtung
- 22: Sensoraufnahme
- 23: Temperaturmesssensor
- 24: Heizdraht
- 25: Wabenstruktur
- 26: Hohlraum
- 27: Signalkabel
- 28: Sicherungshülse
- 29: Schraubelement
- α: Winkel
- A: erster Abschnitt
- B: zweiter Abschnitt
- NB: Nutbreite

## Patentansprüche

1. Heißkanaldüse (1) für Spritzgießformen, aufweisend ein Düsenrohr (10), in dem ein Durchtrittskanal (11) zum Durchtritt einer Kunststoffschmelze ausgebildet ist, wobei sich der Durchtrittskanal (11) von einer rückseitigen Kanaleintrittsseite (12) bis zu einer vorderseitigen Düsenspitze (13) entlang einer Mittelachse (14) erstreckt und in wenigstens einem Austrittskanal (15) in der Düsenspitze (13) mündet, durch den die Kunststoffschmelze austreibbar ist, wobei ein Anlagekragen (16) zur dichtenden Anlage gegen die Spritzgießform vorgesehen ist, und wobei wenigstens der Anlagekragen (16), die Düsenspitze (13) und/oder das Düsenrohr (10) mittels eines generativen Fertigungsverfahrens als einteiliger Grundkörper (17) hergestellt sind,
wobei zwischen dem Anlagekragen (16) und der Düsenspitze (13) eine wenigstens teilweise um die Düsenspitze (13) umlaufende Wärmebarrierenut (18) mit wenigstens einer Hinterschneidung (19) eingebracht ist,
**dadurch gekennzeichnet,**
**dass** im Bereich der Düsenspitze (13) und/oder unterhalb der sich verjüngenden Düsenspitze (3) im Bereich der Wärmebarrierenut (18) eine Sensoraufnahme (22) im Grundkörper (17) eingebracht ist, in die ein Temperaturmesssensor (23) einsetzbar ist, wobei die Sensoraufnahme (22) die umlaufende Wärmebarrierenut (18) unterbricht, da die Sensoraufnahme (22) in den Bereich der Wärmebarrierenut (18) hineinragt und folglich die Wärmebarrierenut (18) nicht auf dem vollen Umfang die Düsenspitze (13) umschließt, sondern sodass die Wärmebarrierenut (18) im Bereich der Sensoraufnahme (22) unterbrochen ist.

2. Heißkanaldüse (1) nach Anspruch 1,
**dadurch gekennzeichnet,**
**dass** die Wärmebarrierenut (18) einen ersten Abschnitt (A) aufweist, der sich in der Mittelachse (14) erstreckt.

3. Heißkanaldüse (1) nach Anspruch 1 oder 2,
**dadurch gekennzeichnet,**
**dass** auf den ersten Abschnitt (A) die Wärmebarrierenut (18) in Richtung zur rückseitigen Kanaleintrittsseite (12) in die Hinterschneidung (19) übergeht.

4. Heißkanaldüse (1) nach Anspruch 1 bis 3,
**dadurch gekennzeichnet,**
**dass** die Wärmebarrierenut (18) einen zweiten Abschnitt (B) aufweist, der sich unter einem Winkel (α) von der Mittelachse (14) weg in Richtung zur rückseitigen Kanaleintrittsseite (12) erstreckt.

5. Heißkanaldüse (1) nach Anspruch 4,
**dadurch gekennzeichnet,**
**dass** die Wärmebarrierenut (18) am Ende des zweiten Abschnittes (B) eine Querschnittsaufdickung (20) aufweist.

6. Heißkanaldüse (1) nach Anspruch 5,
**dadurch gekennzeichnet,**
**dass** die Querschnittsaufdickung (20) einen Kreisquerschnitt aufweist.

7. Heißkanaldüse (1) nach einem der vorgenannten Ansprüche,
**dadurch gekennzeichnet,**
**dass** die Wärmebarrierenut (18) zueinander parallel verlaufende innere und äußere Nutwandungen (18i, 18a) aufweist und damit eine im Wesentlichen gleichbleibende Nutbreite (NB) besitzt.

8. Heißkanaldüse (1) nach einem der Ansprüche 2 bis 7,
**dadurch gekennzeichnet,**
**dass** der erste Abschnitt (A) der Wärmebarrierenut (18) den Anlagekragen (16) radial nach innen begrenzt.

9. Heißkanaldüse (1) nach einem der Ansprüche 2 bis 8,
**dadurch gekennzeichnet,**
**dass** der erste Abschnitt (A) der Wärmebarrierenut (18) in einem Querschnitt eine taschenartig und radial nach außen ausgebildete Ausbuchtung (21) aufweist, wobei sich die Ausbuchtung (21) im Bereich des Anlagekragens (16) befindet und eine Hinterschneidung (19) bildet.

10. Heißkanaldüse (1) nach einem der vorgenannten Ansprüche,
**dadurch gekennzeichnet,**
**dass** die Wärmebarrierenut (18) in einer umlaufenden Planfläche (16a) des Anlagekragens (16) mündet, wobei die Planfläche (16a) mit Bezug auf das Ende der Düsenspitze (13) hinter einer Austrittsseite des Austrittskanals (15) in der Düsenspitze (13) liegt.

11. Heißkanaldüse (1) nach einem der vorgenannten Ansprüche,
**dadurch gekennzeichnet,**
**dass** ein Heizdraht (24) vorgesehen ist, der den Bereich des Grundkörpers (17) unterhalb der Düsenspitze (13) mäanderförmig umschließt.

12. Heißkanaldüse (1) nach einem der vorgenannten Ansprüche,
**dadurch gekennzeichnet,**
**dass** die Außenfläche des Grundkörpers (17) eine Wabenstruktur (25) aufweist.

13. Heißkanaldüse (1) nach einem der vorgenannten Ansprüche,
**dadurch gekennzeichnet,**
im Grundkörpers (17) ein umlaufender Hohlraum (26) ausgebildet ist, der sich bis unter den inneren Mündungsbereich des Austrittskanals (15) in den Durchtrittskanal (11) hin erstreckt.

## Claims

1. A hot runner nozzle (1) for injection molds comprising a nozzle pipe (10) in which a passage channel (11) for the passage of a plastic melt is formed, wherein the passage channel (11) extends along a center axis (14) from a rear side channel inlet side (12) up to a front side nozzle tip (13) and opens in at least one outlet channel (15) in the nozzle tip (13) through which the plastic melt can be driven, wherein a contact collar (16) for a sealing contact with the injection mold is provided, and wherein at least the contact collar (16), the nozzle tip (13), and/or the nozzle pipe (16) are manufactured by means of a generative production process as a single part base member (17),
wherein a thermal barrier groove (18) having at least one undercut (19) and at least partially running around the nozzle tip (13) is introduced between the contact collar (16) and the nozzle tip (13), **characterized in that**
a sensor mount (22) into which a temperature measuring sensor (23) can be inserted is introduced in the base member (17) in the region of the nozzle tip (13) and/or below the tapering nozzle tip (13) in the region of the thermal barrier groove (18), with the sensor mount (22) interrupting the peripheral thermal barrier groove (18) since the sensor mount (22) projects into the region of the thermal barrier groove (18) and the thermal barrier groove (18) consequently does not surround the nozzle tip (13) over the full periphery, but rather so that the thermal barrier groove (18) is interrupted in the region of the sensor mount (22).

2. A hot runner nozzle (1) in accordance with claim 1,
**characterized in that**
the thermal barrier groove (18) has a first section (A) that extends in the center axis (14).

3. A hot runner nozzle (1) in accordance with claim 1 or claim 2,
**characterized in that**
the thermal barrier groove (18) merges into the undercut (19) on the first section (A) in the direction toward the rear side channel inlet side (12).

4. A hot runner nozzle (1) in accordance with claims 1 to 3,
**characterized in that**
the thermal barrier groove (18) has a second section (B) that extends at an angle (α) away from the center axis (14) in the direction toward the rear side channel inlet side (12).

5. A hot runner nozzle (1) in accordance with claim 4,
**characterized in that**
the thermal barrier groove (18) has a thickened cross-section portion (20) at the end of the second section (B).

6. A hot runner nozzle (1) in accordance with claim 5,
**characterized in that**
the thickened cross-section portion (20) has a circular cross-section.

7. A hot runner nozzle (1) in accordance with one of the preceding claims,
**characterized in that**
the thermal barrier groove (18) has inner and outer groove walls (18i, 18a) extending in parallel with one another and thus has a substantially unchanging groove width (NB).

8. A hot runner nozzle (1) in accordance with one of the claims 2 to 7,
**characterized in that**
the first section (A) of the thermal barrier groove (18) radially inwardly bounds the contact collar (16).

9. A hot runner nozzle (1) in accordance with one of the claims 2 to 8,
**characterized in that**
the first section (A) of the thermal barrier groove (18) has a pocket-like and radially outward bulge (21) in a cross-section, with the bulge (21) being in the region of the contact collar (16) and forming an undercut (19).

10. A hot runner nozzle (1) in accordance with one of the preceding claims,
**characterized in that**
the thermal barrier groove (18) opens in a peripheral planar surface (16a) of the contact collar (16), with the planar surface (16a) being disposed behind an outlet side of the outlet channel (15) in the nozzle tip (13) with respect to the end of the nozzle tip (13).

11. A hot runner nozzle (1) in accordance with one of the preceding claims,
**characterized in that**
a heating wire (24) is provided that surrounds the region of the base member (17) below the nozzle tip (13) in a meandering manner.

12. A hot runner nozzle (1) in accordance with one of the preceding claims,
**characterized in that**
the outer surface of the base member (17) has a honeycomb structure (25).

13. A hot runner nozzle (1) in accordance with one of the preceding claims,
**characterized in that**
a peripheral hollow space (26) that extends up to and below the inner opening region of the outlet channel (15) into the passage channel (11) is formed in the base member (17).

## Revendications

1. Buse de canal chaud (1) pour moules de moulage par injection, présentant un tube de buse (10), dans lequel un canal de passage (11) est réalisé pour le passage d'une matière plastique fondue, le canal de passage (11) s'étendant depuis un côté entrée de canal (12) arrière jusqu'à une pointe de buse (13) avant le long d'un axe central (14) et débouchant dans au moins un canal de sortie (15) dans la pointe de buse (13), à travers lequel la matière plastique fondue peut être expulsée, un collet d'appui (16) étant prévu pour l'appui étanchéifiant contre le moule de moulage par injection et au moins le collet d'appui (16), la pointe de buse (13) et/ou le tube de buse (10) étant fabriqués comme corps de base (17) en une seule pièce au moyen d'un procédé de fabrication additive,
dans laquelle une rainure formant barrière thermique (18) s'étendant au moins sur une partie de la périphérie de la pointe de buse (13), dotée d'au moins une contre-dépouille (19), est ménagée entre le collet d'appui (16) et la pointe de buse (13), **caractérisée en ce que**
dans la zone de la pointe de buse (13) et/ou en dessous de la pointe de buse (3) s'amincissant dans la zone de la rainure formant barrière thermique (18), un logement de capteur (22) est ménagé dans le corps de base (17), dans lequel un capteur de mesure de la température (23) peut être introduit, le logement de capteur (22) interrompant la rainure formant barrière thermique (18) périphérique, étant donné que le logement de capteur (22) fait saillie dans la zone de la rainure formant barrière thermique (18) et par conséquent la rainure formant barrière thermique (18) n'entoure pas la pointe de buse (13) sur toute la périphérie mais de telle sorte que la rainure formant barrière thermique (18) est interrompue dans la zone du logement de capteur (22).

2. Buse de canal chaud (1) selon la revendication 1,
**caractérisée en ce que**
la rainure formant barrière thermique (18) présente une première partie (A) qui s'étend dans l'axe central (14).

3. Buse de canal chaud (1) selon la revendication 1 ou 2,
**caractérisée en ce que**
sur la première partie (A), la rainure formant barrière thermique (18) se fond dans la contre-dépouille (19) dans la direction du côté entrée de canal (12) arrière.

4. Buse de canal chaud (1) selon les revendications 1 à 3,
**caractérisée en ce que**
la rainure formant barrière thermique (18) présente une seconde partie (B) qui s'étend selon un angle (α) depuis l'axe central (14) en direction du côté entrée de canal (12) arrière.

5. Buse de canal chaud (1) selon la revendication 4,
**caractérisée en ce que**
la rainure formant barrière thermique (18) présente, à l'extrémité de la seconde partie (B), un épaississement de section transversale (20).

6. Buse de canal chaud (1) selon la revendication 5,
**caractérisée en ce que**
l'épaississement de section transversale (20) présente une section transversale circulaire.

7. Buse de canal chaud (1) selon l'une des revendications précédentes,
**caractérisée en ce que**
la rainure formant barrière thermique (18) présente des parois de rainure (18i, 18a) intérieure et extérieure s'étendant parallèlement l'une à l'autre et possède ainsi une largeur de rainure (NB) sensiblement constante.

8. Buse de canal chaud (1) selon l'une des revendications 2 à 7,
**caractérisée en ce que**
la première partie (A) de la rainure formant barrière thermique (18) limite le collet d'appui (16) radialement vers l'intérieur.

9. Buse de canal chaud (1) selon l'une des revendications 2 à 8,
**caractérisée en ce que**
la première partie (A) de la rainure formant barrière thermique (18) présente, dans une section transversale, une bosse sortante (21) réalisée en forme de poche et radialement vers l'extérieur, la bosse sortante (21) se trouvant dans la zone du collet d'appui (16) et formant une contre-dépouille (19).

10. Buse de canal chaud (1) selon l'une des revendications précédentes,
**caractérisée en ce que**
la rainure formant barrière thermique (18) débouche dans une surface plane (16a) périphérique du collet d'appui (16), la surface plane (16a) se trouvant, par rapport à l'extrémité de la pointe de buse (13), derrière un côté sortie du canal de sortie (15) situé dans la pointe de buse (13).

11. Buse de canal chaud (1) selon l'une des revendications précédentes,
**caractérisée en ce que**
un fil de chauffe (24) est prévu, qui entoure de manière sinueuse la zone du corps de base (17) sous la pointe de buse (13).

12. Buse de canal chaud (1) selon l'une des revendications précédentes,
**caractérisée en ce que**
la surface extérieure du corps de base (17) présente une structure en nid d'abeille (25).

13. Buse de canal chaud (1) selon l'une des revendications précédentes,
**caractérisée en ce que**
une cavité (26) périphérique est réalisée dans le corps de base (17), laquelle s'étend jusqu'en dessous de la zone d'embouchure intérieure du canal de sortie (15) dans le canal de passage (11).
